# EUROPEAN PATENT APPLICATION

(11) **EP 4 678 367 A1**
(43) Date of publication of application: **14.01.2026**
(21) Application number: 24766861.9
(22) Date of filing: 20.02.2024
(51) Int. Cl.: B29B 17/00, C08J 11/08

(54) **METHOD FOR MANUFACTURING ALICYCLIC STRUCTURE-CONTAINING POLYMER RECYCLED PRODUCT**

(30) Priority: 08.03.2023 JP 2023035987
(71) Applicant: Zeon Corporation, Tokyo 100-8246 (JP)
(72) Inventor: YAMADA Yusuke, Tokyo 100-8246 (JP)
(74) Representative: Maiwald GmbH
(86) International application number: PCT/JP2024/006098
(87) International publication number: WO 2024/185490

(57) **Abstract**

Provided is a method of producing a recycled alicyclic structure-containing polymer in which a recycled alicyclic structure-containing polymer is obtained by efficiently and effectively removing a crystalline polymer from a shaped product containing the crystalline polymer and an alicyclic structure-containing polymer. The method of producing a recycled alicyclic structure-containing polymer is a method of producing a recycled alicyclic structure-containing polymer from a shaped product containing a crystalline polymer and an alicyclic structure-containing polymer that is amorphous and includes a specific dissolution step, a specific heating step, a specific cooling step, and a specific removal step.

## Description

### TECHNICAL FIELD

The present disclosure relates to a method of producing a recycled alicyclic structure-containing polymer.

### BACKGROUND

Alicyclic structure-containing polymers are widely used in various fields such as optical materials, medical materials, and electrical component materials due to excelling in terms of characteristics such as transparency, heat resistance, moisture resistance, chemical resistance, and electrical characteristics. This results in the generation of large quantities of used waste material arising after use of shaped products containing such alicyclic structure-containing polymers and processing waste material arising during production of such shaped products.

In recent years, recycled plastic obtained by collecting waste material of shaped products containing alicyclic structure-containing polymers and then further performing grinding and pelletization as necessary has widely been used. Since foreign substances and the like may remain when waste material of a shaped product containing an alicyclic structure-containing polymer is reused, studies are being conducted in relation to the removal of foreign substances from waste material in order to reuse alicyclic structure-containing polymers.

For example, Patent Literature (PTL) 1 discloses a method of reusing a resin shaped product in which a resin shaped product containing an alicyclic structure-containing polymer is ground, and then the ground shaped product that is obtained is dissolved in a specific mixed solvent so as to remove foreign substances from the ground shaped product.

### CITATION LIST

### Patent Literature

PTL 1: WO2022/163543A1

### SUMMARY

### (Technical Problem)

A shaped product that contains an alicyclic structure-containing polymer may, depending on the application, etc. thereof, have been obtained through kneading with a crystalline polymer such as polyethylene or polypropylene. In order to reuse the alicyclic structure-containing polymer from waste material of such a shaped product, it is necessary to efficiently and effectively remove the crystalline polymer from the shaped product.

Accordingly, an object of the present disclosure is to provide a method of producing a recycled alicyclic structure-containing polymer in which a recycled alicyclic structure-containing polymer is obtained by efficiently and effectively removing a crystalline polymer from a shaped product containing the crystalline polymer and an alicyclic structure-containing polymer.

### (Solution to Problem)

The inventor conducted diligent investigation with the aim of solving the problem set forth above. The inventor made a new discovery that the problem set forth above can be solved through a method of producing a recycled alicyclic structure-containing polymer in which a polymer solution containing an alicyclic structure-containing polymer that is amorphous and a crystalline polymer is heated to a specific temperature range and is subsequently cooled to a specific temperature range, and, in this manner, the inventor completed the present disclosure.

Specifically, with the aim of advantageously solving the problem set forth above, [1] a presently disclosed method of producing a recycled alicyclic structure-containing polymer is a method of producing a recycled alicyclic structure-containing polymer from a shaped product containing a crystalline polymer and an alicyclic structure-containing polymer that is amorphous, comprising: dissolving at least the alicyclic structure-containing polymer in a solvent through mixing of the shaped product with the solvent to obtain a polymer solution; heating the polymer solution to a temperature of not lower than Tc₁ - 75°C and not higher than Tc₁°C, given that a crystallization temperature of the crystalline polymer is taken to be Tc₁°C; cooling the polymer solution after the heating to a temperature that is lower than a heating temperature in the heating and that is not higher than 40°C; and removing the crystalline polymer from the polymer solution after the cooling.

Through a method of producing a recycled alicyclic structure-containing polymer such as set forth above, it is possible to efficiently and effectively remove a crystalline polymer from a shaped product to obtain a recycled alicyclic structure-containing polymer.

Note that efficiently removing the crystalline polymer from the shaped product means a fast rate of removal of the crystalline polymer from the shaped product and a fast rate of production (recycling) of the recycled alicyclic structure-containing polymer. Moreover, effectively removing the crystalline polymer from the shaped product means a high removal fraction of the crystalline polymer from the shaped product and high purity of the recycled alicyclic structure-containing polymer that is obtained.

The crystallization temperature of a crystalline polymer referred to in the present specification can be measured by a differential scanning calorimeter (DSC).

When an alicyclic structure-containing polymer is said to be "amorphous" in the present specification, this means that a melting point cannot be measured using a differential scanning calorimeter (DSC).

[2] In the method of producing a recycled alicyclic structure-containing polymer according to the foregoing [1], a cooling temperature in the cooling is preferably 20°C or higher.

When the cooling temperature in the cooling is not lower than the lower limit set forth above, the crystalline polymer can be more efficiently removed from the shaped product.

[3] In the method of producing a recycled alicyclic structure-containing polymer according to the foregoing [1] or [2], a cooling temperature in the cooling is preferably 30°C or lower.

When the cooling temperature in the cooling is not higher than the upper limit set forth above, the crystalline polymer can be more effectively removed from the shaped product.

[4] In the method of producing a recycled alicyclic structure-containing polymer according to any one of the foregoing [1] to [3], the heating temperature in the heating is preferably not lower than 60°C and not higher than 100°C.

When the heating temperature in the heating is not lower than the lower limit set forth above, the crystalline polymer can be more efficiently removed from the shaped product.

On the other hand, when the heating temperature in the heating is not higher than the upper limit set forth above, the crystalline polymer can be more effectively removed from the shaped product.

[5] In the method of producing a recycled alicyclic structure-containing polymer according to any one of the foregoing [1] to [4], the heating temperature in the heating is preferably Tc₁ - 20°C or lower.

When the heating temperature in the heating is not higher than the upper limit set forth above, the crystalline polymer can be more effectively removed from the shaped product.

[6] In the method of producing a recycled alicyclic structure-containing polymer according to any one of the foregoing [1] to [5], the solvent is preferably a poor solvent for the crystalline polymer.

When the solvent is a poor solvent for the crystalline polymer, the crystalline polymer can be more efficiently and more effectively removed from the shaped product.

The phrase "poor solvent for the crystalline polymer" as used in the present specification means a solvent having a solubility parameter value (hereinafter, also referred to as an "SP value") of not less than 7 (cal/cm³)^{1/2} and not more than 9.9 (cal/cm³)^{1/2}. Note that the "solubility parameter (SP value)" referred to in the present specification means the Hansen solubility parameter (δ) (units: (cal/cm³)^{1/2}) and is a parameter expressed by a relationship formula: δ² = δd² + δp² + δh². In the preceding relationship formula "δd" indicates a "term for the contribution due to dispersion forces between molecules", "δp" indicates a "term for the contribution due to polar interactions between molecules", and "δh" indicates a "term for the contribution due to hydrogen bonds between molecules", and these are physical property values that are dependent of the type of substance (refer to Charles M. Hansen, "Hansen Solubility Parameters: A User's Handbook, Second Edition", CRC Press, Boca Raton FL, (2007) (hereinafter, also referred to as "the Handbook")). In the case of an organic solvent that is not recorded in the Handbook, for example, an estimated value that is calculated using computer software "Hansen Solubility Parameters in Practice (HSPiP)" can be used.

[7] In the method of producing a recycled alicyclic structure-containing polymer according to the foregoing [6], the poor solvent is preferably cyclohexane.

When the poor solvent is cyclohexane, the crystalline polymer can be even more efficiently and even more effectively removed from the shaped product.

[8] In the method of producing a recycled alicyclic structure-containing polymer according to any one of the foregoing [1] to [7], the crystalline polymer is preferably polypropylene.

When the crystalline polymer is polypropylene, the crystalline polymer can be more efficiently and more effectively removed from the shaped product.

### (Advantageous Effect)

According to the present disclosure, it is possible to provide a method of producing a recycled alicyclic structure-containing polymer in which a recycled alicyclic structure-containing polymer is obtained by efficiently and effectively removing a crystalline polymer from a shaped product containing the crystalline polymer and an alicyclic structure-containing polymer.

### DETAILED DESCRIPTION

The following provides a detailed description of embodiments of the present disclosure.

### (Method of producing recycled alicyclic structure-containing polymer)

The presently disclosed method of producing a recycled alicyclic structure-containing polymer (hereinafter, also referred to as the "presently disclosed production method") is a method of producing a recycled alicyclic structure-containing polymer from a shaped product containing a crystalline polymer and an alicyclic structure-containing polymer that is amorphous (hereinafter, also referred to as an "amorphous alicyclic structure-containing polymer"). The presently disclosed production method includes: a dissolution step of dissolving at least the alicyclic structure-containing polymer in a solvent through mixing of the shaped product with the solvent to obtain a polymer solution; a heating step of heating the polymer solution to a temperature of not lower than Tc₁ - 75°C and not higher than Tc₁°C, given that a crystallization temperature of the crystalline polymer is taken to be Tc₁°C; a cooling step of cooling the polymer solution after the heating step to a temperature that is lower than a heating temperature in the heating step and that is not higher than 40°C; and a removal step of removing the crystalline polymer from the polymer solution after the cooling step.

Through a production method such as set forth above, it is possible to efficiently and effectively remove a crystalline polymer from a shaped product containing the crystalline polymer and an amorphous alicyclic structure-containing polymer to obtain a recycled alicyclic structure-containing polymer. The reason for this is presumed to be that by heating the polymer solution to not lower than Tc₁ - 75°C and not higher than Tc₁°C and subsequently cooling the polymer solution to a temperature that is lower than the heating temperature and not higher than 40°C, the crystalline polymer forms solid lumps after crystallization of an amorphous portion of the crystalline polymer, and these solid lumps can easily be removed in the removal step (i.e., the crystalline polymer can easily be removed as solid lumps).

Note that in a situation in which the heating step and the cooling step described above are not performed, the crystalline polymer swells in the polymer solution, and, as a result, it is difficult to remove the crystalline polymer in the removal step. In other words, it is difficult to obtain a recycled alicyclic structure-containing polymer by efficiently and effectively removing a crystalline polymer from a shaped product containing the crystalline polymer and an amorphous alicyclic structure-containing polymer.

The presently disclosed production method may optionally further include steps such as a step (grinding step) of grinding the shaped product to obtain a ground shaped product before the shaped product is mixed with the solvent, a step (sieving step) of sieving the ground shaped product using a sieve having a specific opening size (φ) in-between the grinding step and the dissolution step, and a step (drying step) of drying the polymer solution after the removal step.

### <Shaped product>

The shaped product that is used in the presently disclosed production method is a shaped product that contains a crystalline polymer and an amorphous alicyclic structure-containing polymer and that may optionally further contain components other than the crystalline polymer and the amorphous alicyclic structure-containing polymer (hereinafter, also referred to as "other components").

Shaped products obtained by various shaping methods such as injection molding, extrusion molding, extrusion blow molding, injection blow molding, multilayer blow molding, suction blow molding, double wall blow molding, stretch blow molding, vacuum forming, and rotational molding may serve as the shaped product used in the presently disclosed production method without any specific limitations on shape, physical properties, and so forth.

Specific examples of shaped products that may be used include shaped products for optical applications such as lenses, prisms, optical films, optical sheets, optical disc substrates, light-guiding plates, light guides, optical fibers, and mirrors; shaped products for medical applications such as disposable syringes, pharmaceutical solution vials, films for pharmaceutical packaging, storage containers for medical devices, test cells, test containers, infusion bags, and syringe rods; shaped products for electrical and electronic applications such as sheets, films, plate materials, containers, and electrically insulating materials for electrical wire coatings, wafer shippers, capacitor films, circuit boards, connectors, and so forth; and also pipes, round bars, bottles, building materials, stationery, and so forth. Moreover, the shaped product may be waste material of a shaped product, processing waste material arising during production of a shaped product (for example, film edges or die cutting remnants), or a used shaped product, for example.

### [Crystalline polymer]

The crystalline polymer may be a polyolefin such as polyethylene or polypropylene, a polyamide (nylon), a polyester, cellulose, or the like. These polymers are polymers that can crystallize. Of these polymers, polyolefins are preferable in terms of enabling more efficient and more effective removal of the crystalline polymer from the shaped product, polypropylene and polyethylene are more preferable, and polypropylene is even more preferable. The shaped product described above may contain one of these polymers individually or may contain two or more of these polymers.

Note that the proportional content of the crystalline polymer that is contained in the shaped product differs depending on the shape, application, and so forth of the shaped product and is not specifically limited.

Although no specific limitations are placed on the crystallization temperature of the crystalline polymer, the crystallization temperature is 80°C or higher, for example, and may be 100°C or higher, or may be 130°C or higher, and the crystallization temperature is 170°C or lower, for example, and may be 160°C or lower.

### [Amorphous alicyclic structure-containing polymer]

The amorphous alicyclic structure-containing polymer is a polymer having an alicyclic structure in a main chain and/or a side chain. A polymer that has an alicyclic structure in a main chain is preferable from viewpoints such as mechanical strength and heat resistance of a recycled alicyclic structure-containing polymer, for example. The alicyclic structure of the amorphous alicyclic structure-containing polymer may be a saturated cyclic hydrocarbon (cycloalkane) structure, an unsaturated cyclic hydrocarbon (cycloalkene) structure, or the like, with a cycloalkane structure and a cycloalkene structure being preferable, and a cycloalkane structure more preferable from viewpoints such as mechanical strength and heat resistance of a recycled alicyclic structure-containing polymer. Although no specific limitations are placed on the number of carbon atoms forming the alicyclic structure, from a viewpoint of preserving high levels of mechanical strength, heat resistance, and formability of a recycled alicyclic structure-containing polymer, the number of carbon atoms is preferably 4 or more, and more preferably 5 or more, and is preferably 30 or less, more preferably 20 or less, and even more preferably 15 or less.

The proportion constituted by alicyclic structure-containing repeating units (monomer units) in the amorphous alicyclic structure-containing polymer is normally 30 mass% or more, and is preferably 50 mass% or more, and more preferably 70 mass% or more.

When the proportion constituted by alicyclic structure-containing repeating units in the amorphous alicyclic structure-containing polymer is not less than any of the lower limits set forth above, heat resistance of a recycled alicyclic structure-containing polymer can be improved, for example. A remaining portion other than alicyclic structure-containing repeating units in the amorphous alicyclic structure-containing polymer can have various configurations without any specific limitations.

Specific examples of the amorphous alicyclic structure-containing polymer described above include (1) a norbornene-based polymer, (2) a monocyclic cycloolefin polymer, (3) a cyclic conjugated diene polymer, (4) a vinyl alicyclic hydrocarbon polymer, and hydrogenated products of these polymers. Of these examples, a norbornene-based polymer or hydrogenated product thereof and a cyclic conjugated diene polymer or hydrogenated product thereof are preferable, and a norbornene-based polymer or hydrogenated product thereof is more preferable.

### (1) Norbornene-based polymer

The norbornene-based polymer may be a polymer obtained through polymerization of a norbornene-based monomer by a method disclosed in JP-H3-14882A or JP-H3-122137A, for example, but is not specifically limited thereto. Specifically, the norbornene-based polymer may be a ring-opened polymer of a norbornene-based monomer, a hydrogenated product of that ring-opened polymer, an addition polymer of a norbornene-based monomer, an addition copolymer of a norbornene-based monomer and a vinyl compound, or the like. Of these norbornene-based polymers, a hydrogenated ring-opened polymer of a norbornene-based monomer, an addition polymer of a norbornene-based monomer, an addition copolymer of a norbornene-based monomer and a copolymerizable vinyl compound, or the like is preferable from a viewpoint of preserving high levels of heat resistance and dielectric characteristics of a recycled alicyclic structure-containing polymer, for example, and a hydrogenated ring-opened polymer of a norbornene-based monomer is particularly preferable.

Examples of norbornene-based monomers that may be used include bicyclo[2.2.1]hept-2-ene (commonly referred to as norbornene), 5-methyl-bicyclo[2.2.1]hept-2-ene, 5,5-dimethyl-bicyclo[2.2.1]hept-2-ene, 5-ethyl-bicyclo[2.2.1]hept-2-ene, 5-butyl-bicyclo[2.2.1]hept-2-ene, 5-hexyl-bicyclo[2.2.1]hept-2-ene, 5-octyl-bicyclo[2.2.1]hept-2-ene, 5-octadecyl-bicyclo[2.2.1]hept-2-ene, 5-methylidene-bicyclo[2.2.1]hept-2-ene, 5-ethylidene-bicyclo[2.2.1]hept-2-ene, 5-vinyl-bicyclo[2.2.1]hept-2-ene, 5-propenyl-bicyclo[2.2.1]hept-2-ene, 5-methoxy-carbonyl-bicyclo[2.2.1]hept-2-ene, 5-cyano-bicyclo[2.2.1]hept-2-ene, 5-methyl-5-methoxycarbonyl-bicyclo[2.2.1]hept-2-ene; 5-methoxycarbonylbicyclo[2.2.1]hept-2-ene, 5-ethoxycarbonylbicyclo[2.2.1]hept-2-ene, 5-methyl-5-methoxycarbonylbicyclo[2.2.1]hept-2-ene, 5-methyl-5-ethoxycarbonylbicyclo[2.2.1]hept-2-ene, bicyclo[2.2.1]hept-5-enyl-2-methylpropionate, bicyclo[2.2.1]hept-5-enyl-2-methyloctanate, bicyclo[2.2.1]hept-2-ene-5,6-dicarboxylic anhydride, 5-hydroxymethylbicyclo[2.2.1]hept-2-ene, 5,6-di(hydroxymethyl)bicyclo[2.2.1]hept-2-ene, 5-hydroxy-i-propylbicyclo[2.2.1]hept-2-ene, 5,6-dicarboxybicyclo[2.2.1]hept-2-ene, 5-cyanobicyclo[2.2.1]hept-2-ene, bicyclo[2.2.1]hept-2-ene-5,6-dicarboxylic acid imide, tricyclo[4.3.0.1^{2,5}]deca-3,7-diene (commonly referred to as dicyclopentadiene), tricyclo[4.3.0.1^{2,5}]dec-3-ene, tricyclo[4.3.0.1^{2,5}]undeca-3,7-diene, tricyclo[4.3.0.1^{2,5}]undeca-3,8-diene, tricyclo[4.4.0.1^{2,5}]undec-3-ene, which is a partially hydrogenated product of tricyclo[4.3.0.1^{2,5}]undeca-3,7-diene or tricyclo[4.3.0.1^{2,5}]undeca-3,8-diene (or an addition product of cyclopentadiene and cyclohexene), 5-cyclopentyl-bicyclo[2.2.1]hept-2-ene, 5-cyclohexyl-bicyclo[2.2.1]hept-2-ene, 5-cyclohexenylbicyclo[2.2.1]hept-2-ene, 5-phenyl-bicyclo[2.2.1]hept-2-ene, tetracyclo[4.4.0.1^{2,5}.1^{7,10}]-dodec-3-ene (also referred to simply as "tetracyclododecene"), 8-methyltetracyclo[4.4.0.1^{2,5}.1^{7,10}]-dodec-3-ene, 8-ethyltetracyclo[4.4.0.1^{2,5}.1^{7,10}]-dodec-3-ene (commonly referred to as ethyltetracyclododecene (ETD)), 8-methylidenetetracyclo[4.4.0.1^{2,5}.1^{7,10}]-dodec-3-ene, 8-ethylidenetetracyclo[4.4.0.1^{2,5}.1^{7,10}]-dodec-3-ene, 8-vinyltetracyclo[4.4.0.1^{2,5}.1^{7,10}]-dodec-3-ene, 8-propenyl-tetracyclo[4.4.0.1^{2,5}.1^{7,10}]-dodec-3-ene, 8-methoxycarbonyltetracyclo[4.4.0.1^{2,5}1^{7,10}]-dodec-3-ene, 8-methyl-8-methoxycarbonyltetracyclo[4.4.0.1^{2,5}.1^{7,10}]-dodec-3-ene, 8-hydroxymethyltetracyclo[4.4.0.1^{2,5}1^{7,10}]-dodec-3-ene, 8-carboxytetracyclo[4.4.0.1^{2,5}.1^{7,10}]-dodec-3-ene; 8-cyclopentyl-tetracyclo[4.4.0.1^{2,5}.1^{7,10}]-dodec-3-ene, 8-cyclohexyl-tetracyclo[4.4.0.1^{2,5}.1^{7,10}]-dodec-3-ene, 8-cyclohexenyl-tetracyclo[4.4.0.1^{2,5}.1^{7,10}]-dodec-3-ene, 8-phenyl-cyclopentyl-tetracyclo[4.4.0.1^{2,5}.1^{7,10}]-dodec-3-ene; tetracyclo[7.4.0.1^{10,13}.0^{2,7}]trideca-2,4,6,11-tetraene (also referred to as 1,4-methano-1,4,4a,9a-tetrahydrofluorene), tetracyclo[8.4.0.1^{11,14}.0^{3,8}]tetradeca-3,5,7,12-tetraene (also referred to as 1,4-methano-1,4,4a,5,10,10a-hexahydroanthracene), pentacyclo[6.5.1.1^{3,6}.0^{2,7}.0^{9,13}]pentadeca-3,10-diene, pentacyclo[7.4.0.1^{3,6}.1^{10,13}.0^{2,7}]pentadeca-4,11-diene; and cyclopentadiene tetramer and other such norbornene-based monomers.

Note that one of these norbornene-based monomers can be used individually, or two or more of these norbornene-based monomers can be used in combination.

Examples of vinyl compounds that are copolymerizable with these norbornene-based monomers include ethylene and α-olefins having a carbon number of 2 to 20 such as ethylene, propylene, 1-butene, 1-pentene, 1-hexene, 3-methyl-1-butene, 3-methyl-1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene, 3-ethyl-1-hexene, 1-octene, 1-decene, 1-dodecene, 1-tetradecene, 1-hexadecene, 1-octadecene, and 1-eicosene; cycloolefins such as cyclobutene, cyclopentene, cyclohexene, 3,4-dimethylcyclopentene, 3-methylcyclohexene, 2-(2-methylbutyl)-1-cyclohexene, cyclooctene, and 3a,5,6,7a-tetrahydro-4,7-methano-1H-indene; and non-conjugated dienes such as 1,4-hexadiene, 4-methyl-1,4-hexadiene, 5-methyl-1,4-hexadiene, and 1,7-octadiene.

Note that one of these copolymerizable vinyl compounds can be used individually, or two or more of these copolymerizable vinyl compounds can be used in combination.

Moreover, a cycloolefin can be used as a copolymerizable vinyl compound. Examples of such cycloolefins include monocyclic cycloolefins such as cyclobutene, 1-methylcyclopentene, 3-methylcyclobutene, 3,4-diisopropenylcyclobutene, cyclopentene, 3-methylcyclopentene, cyclohexene, cyclooctene, 1-methylcyclooctene, 5-methylcyclooctene, cyclooctatetraene, and cyclododecene.

No specific limitations are placed on the polymerization method and the hydrogenation method of the norbornene-based monomer or of the norbornene-based monomer and the copolymerizable vinyl compound, and polymerization and hydrogenation can be performed according to commonly known methods.

A ring-opened (co)polymer of a norbornene-based monomer can be obtained by performing ring-opening (co)polymerization of the norbornene-based monomer in a solvent or in the absence of a solvent at normally a polymerization temperature of -50°C to 100°C and a polymerization pressure of 0 kg/cm² to 50 kg/cm² using a catalyst system comprising a halide of a metal such as ruthenium, rhodium, palladium, osmium, iridium, or platinum, a nitrate or acetylacetone compound, and a reductant; or a catalyst system comprising a halide of a metal such as titanium, vanadium, zirconium, tungsten, or molybdenum or acetylacetone compound and an organoaluminum compound. A third component such as molecular oxygen, an alcohol, an ether, a peroxide, a carboxylic acid, an acid anhydride, an acid chloride, an ester, a ketone, a nitrogen-containing compound, a sulfur-containing compound, a halogen-containing compound, molecular iodine, or another Lewis acid can be added into the catalyst system to increase polymerization activity or selectivity of the ring-opening polymerization.

An addition copolymer of a norbornene-based monomer and a vinyl compound can be obtained, for example, by a method of copolymerizing the monomer components in a solvent or in the absence of a solvent at normally a polymerization temperature of -50°C to 100°C and a polymerization pressure of 0 kg/cm² to 50 kg/cm² in the presence of a catalyst system comprising titanium, zirconium, or a vanadium compound and an organoaluminum compound.

A hydrogenated product of a norbornene-based polymer can be obtained by a method of using hydrogen to hydrogenate a ring-opened (co)polymer in the presence of a hydrogenation catalyst according to a standard method.

### (2) Monocyclic cycloolefin polymer

The monocyclic cycloolefin polymer can be an addition polymer of a monocyclic cycloolefin monomer such as cyclohexene, cycloheptene, or cyclooctene as disclosed in JP-S64-66216A, for example.

### (3) Cyclic conjugated diene polymer

The cyclic conjugated diene polymer can be a polymer obtained through 1,2- or 1,4-addition polymerization of a cyclic conjugated diene monomer such as cyclopentadiene or cyclohexadiene or a hydrogenated product thereof as disclosed in JP-H6-136057A or JP-H7-258318A, for example.

### (4) Vinyl alicyclic hydrocarbon polymer

The vinyl alicyclic hydrocarbon polymer can be a polymer of a vinyl alicyclic hydrocarbon monomer such as vinylcyclohexene or vinylcyclohexane or a hydrogenated product thereof as disclosed in JP-S51-59989A or can be a hydrogenated product in which an aromatic ring part of a polymer of a vinyl aromatic monomer such as styrene or α-methylstyrene has been hydrogenated as disclosed in JP-S63-43910A or JP-S64-1706A, for example.

The weight-average molecular weight (Mw₁) of the amorphous alicyclic structure-containing polymer is preferably 5,000 or more, more preferably 8,000 or more, and even more preferably 10,000 or more, and is preferably 500,000 or less, more preferably 200,000 or less, even more preferably 100,000 or less, and further preferably 35,000 or less.

When the weight-average molecular weight of the amorphous alicyclic structure-containing polymer is not less than any of the lower limits set forth above, physical properties such as heat resistance of a recycled alicyclic structure-containing polymer can be improved.

On the other hand, when the weight-average molecular weight of the amorphous alicyclic structure-containing polymer is not more than any of the upper limits set forth above, the crystalline polymer can be more efficiently removed from the shaped product.

The "weight-average molecular weight" of an amorphous alicyclic structure-containing polymer and a recycled alicyclic structure-containing polymer referred to in the present specification can be measured according to a method described in the EXAMPLES section.

The glass-transition temperature (Tg₁) of the amorphous alicyclic structure-containing polymer is preferably 50°C or higher, more preferably 70°C or higher, and even more preferably 90°C or higher, and is preferably 300°C or lower, more preferably 250°C or lower, even more preferably 200°C or lower, and further preferably 130°C or lower.

When the glass-transition temperature is within any of the ranges set forth above, high levels of formability and heat resistance of a recycled alicyclic structure-containing polymer can be preserved. Moreover, the crystalline polymer can be more efficiently removed from the shaped product.

The "glass-transition temperature" of an amorphous alicyclic structure-containing polymer and a recycled alicyclic structure-containing polymer referred to in the present specification can be measured according to a method described in the EXAMPLES section.

The temperature of 5% weight loss upon heating (measured at a heating rate of 5°C/min in a nitrogen atmosphere) of the amorphous alicyclic structure-containing polymer is preferably 300°C or higher, and more preferably 350°C or higher.

When the temperature of 5% weight loss upon heating of the amorphous alicyclic structure-containing polymer is not lower than any of the lower limits set forth above, the occurrence of shaping defects such as the inclusion of air bubbles can be inhibited even in a situation in which a recycled alicyclic structure-containing polymer is shaped at high temperature to obtain a shaped product as a recycled article (hereinafter, also referred to as a "recycled shaped product").

The melt viscosity at a temperature of 260°C of the amorphous alicyclic structure-containing polymer is normally 1 × 10¹ P (poise) or more, and preferably 1 × 10² P or more, and is normally 1 × 10⁵ P or less, and preferably 1 × 10⁴ P or less.

When the melt viscosity is within any of the ranges set forth above, high levels of formability and mechanical strength of a recycled alicyclic structure-containing polymer can be preserved.

### [Other components]

Examples of other components include polymers other than the crystalline polymer and the amorphous alicyclic structure-containing polymer (for example, polyvinyl chloride, polystyrene, etc.); and additives such as antioxidants, ultraviolet absorbers, light stabilizers, near-infrared absorbers, colorants such as dyes and pigments, lubricants, plasticizers, antistatic agents, and fluorescent whitening agents.

### <Grinding step>

In the grinding step that can optionally be performed, the shaped product is ground to obtain a ground shaped product before mixing of the shaped product with a solvent.

Grinding of the shaped product can be performed using a grinding machine, a cutting machine, or the like. Grinding of the shaped product can shorten dissolution time and improve dissolution efficiency of the amorphous alicyclic structure-containing polymer in the shaped product.

### <Sieving step>

In the sieving step that can optionally be performed, the ground shaped product is sieved using a sieve having a specific opening size (φ) in-between the grinding step and the dissolution step

The specific opening size (φ) is normally 3 mm or more, preferably 4 mm or more, and more preferably 5 mm or more, and is normally 15 mm or less, preferably 12 mm or less, and more preferably 10 mm or less.

By sieving the shaped product using a sieve having an opening size that is not more than any of the upper limits set forth above such that the ground shaped product that is then subjected to dissolution has a small size, it is possible to further shorten the dissolution time and improve dissolution efficiency.

On the other hand, by setting the opening size of the sieve as not less than any of the lower limits set forth above, it is possible to limit reduction of collection efficiency due to ground shaped product that does not pass through the sieve.

### <Dissolution step>

In the dissolution step, the shaped product that has optionally undergone grinding and sieving is mixed with a solvent so as to dissolve at least the amorphous alicyclic structure-containing polymer in the solvent and obtain a polymer solution.

No specific limitations are placed on the solvent that is used in the dissolution step so long as it is a solvent in which the amorphous alicyclic structure-containing polymer can dissolve.

The solvent that is used in the dissolution step is preferably a poor solvent for the crystalline polymer (hereinafter, also referred to simply as a "poor solvent"). When the solvent that is used in the dissolution step is a poor solvent for the crystalline polymer, the crystalline polymer can be present as an undissolved component in the polymer solution, thus enabling more efficient and more effective removal of the crystalline polymer from the shaped product after the heating step and the cooling step.

The poor solvent may be cyclohexane (SP value = approximately 8.2 (cal/cm³)^{1/2}), xylene (SP value = approximately 8.8 (cal/cm³)^{1/2}), toluene (SP value = approximately 8.9 (cal/cm¹)^{1/2}), or the like, for example. Of these solvents, cyclohexane and xylene are preferable because they enable even more efficient and even more effective removal of the crystalline polymer from the shaped product, and cyclohexane is more preferable.

The SP value of the poor solvent is 7 (cal/cm³)^{1/2} or more, preferably 7.6 (cal/cm³)^{1/2} or more, and more preferably 8.2 (cal/cm³)^{1/2} or more, and is 9.9 (cal/cm³)^{1/2} or less, preferably 9.1 (cal/cm³)^{1/2} or less, and more preferably 8.8 (cal/cm³)^{1/2} or less.

The additive amount of the shaped product relative to 100 parts of the solvent in the dissolution step is normally not less than 1 part by mass and not more than 20 parts by mass.

The temperature of the solvent during dissolving of the amorphous alicyclic structure-containing polymer in the dissolution step is normally not lower than 15°C and not higher than 35°C.

Dissolving of the amorphous alicyclic structure-containing polymer in the solvent in the dissolution step may be performed under stirring, and the stirring time is normally not less than 0.5 hours and not more than 10 hours.

### <Heating step>

In the heating step, the polymer solution is heated to a temperature of not lower than Tc₁ - 75°C and not higher than Tc₁°C, given that the crystallization temperature of the crystalline polymer is taken to be Tc₁°C. This can promote crystallization of an amorphous portion of the crystalline polymer.

The heating temperature in the heating step is preferably Tc₁ - 50°C or higher, and is preferably Tc₁ - 20°C or lower, and more preferably Tc₁ - 35°C or lower.

When the heating temperature in the heating step is not lower than any of the lower limits set forth above, the crystalline polymer can be more efficiently removed from the shaped product.

On the other hand, when the heating temperature in the heating step is not higher than any of the upper limits set forth above, the crystalline polymer can be more effectively removed from the shaped product.

Moreover, the heating temperature in the heating step is preferably 60°C or higher, and more preferably 80°C or higher, and is preferably 100°C or lower, and more preferably 90°C or lower.

When the heating temperature in the heating step is not lower than any of the lower limits set forth above, the crystalline polymer can be more efficiently removed from the shaped product.

On the other hand, when the heating temperature in the heating step is not higher than any of the upper limits set forth above, the crystalline polymer can be more effectively removed from the shaped product.

The heating time in the heating step is normally not less than 0.5 hours and not more than 10 hours.

Note that although the polymer solution may be heated under stirring or may be heated in a still state in the heating step, it is preferable that the polymer solution is heated under stirring from a viewpoint of uniformly heating the polymer solution and further promoting crystallization of an amorphous portion of the crystalline polymer.

### <Cooling step>

In the cooling step, the polymer solution after the heating step is cooled to a temperature that is lower than the heating temperature in the heating step and that is not higher than 40°C. This can cause precipitation of the crystalline polymer in the polymer solution as solid lumps.

The cooling temperature in the cooling step is preferably 20°C or higher, and is preferably 30°C or lower.

When the cooling temperature in the cooling step is not lower than the lower limit set forth above, the crystalline polymer can be more efficiently removed from the shaped product.

When the cooling temperature in the cooling step is not higher than the upper limit set forth above, the crystalline polymer can be more effectively removed from the shaped product.

The cooling time in the cooling step is normally not less than 1 hour and not more than 3 hours.

Note that although the polymer solution may be cooled under stirring or may be cooled in a still state in the cooling step, it is preferable that the polymer solution is cooled in a still state from a viewpoint of increasing the size of solid lumps of the crystalline polymer that precipitate and improving the removal rate of the crystalline polymer in the removal step.

Although no specific limitations are placed on the difference between the heating temperature in the heating step and the cooling temperature in the cooling step (= heating temperature - cooling temperature) so long as the crystalline polymer can be removed in the removal step, the difference is 20°C or more, for example, and may be 30°C or more, may be 40°C or more, or may be 50°C or more, and the difference is 150°C or less, for example, and may be 100°C or less, or may be 70°C or less.

Note that the cooling rate in the cooling step is normally not less than 1°C/min and not more than 10°C/min.

### <Removal step>

In the removal step, the crystalline polymer is removed from the polymer solution after the cooling step. The crystalline polymer in the polymer solution after the cooling step is normally present in the polymer solution in the form of solid lumps and thus can easily be removed as solid lumps.

No specific limitations are placed on the means by which the crystalline polymer is removed from the polymer solution after the cooling step, and a commonly known means such as filtration, extraction, or decantation may be adopted. Of these means of removal, removal of the crystalline polymer by filtration is preferable because the crystalline polymer can be more efficiently and more effectively removed from the shaped product. In other words, the removal step is preferably a filtration step.

The following describes the removal step using a filtration step as an example, but the removal step is not limited to this example.

In the filtration step, the polymer solution after the cooling step is filtered to remove the crystalline polymer as a residue (solid lumps). In other words, a recycled alicyclic structure-containing polymer can be obtained as a filtrate.

Although no specific limitations are placed on the temperature of the polymer solution in the filtration step so long as it is a temperature at which the crystalline polymer can be removed, the temperature is normally not lower than 20°C and not higher than 40°C.

It is preferable that a filter aid is used in the filtration step because this enables even more efficient and even more effective removal of the crystalline polymer from the shaped product. The filter aid may, for example, be diatomite (for example, Radiolite (product name)) or perlite (for example, Topco (product name)).

The method by which the filter aid is used may be a body feed method in which the filter aid is added to the polymer solution in advance or a precoating method in which the filter aid is deposited on a filter medium such as a filter to form a filter bed and then filtration is performed, but is preferably a precoating method in terms that mixing of filter aid powder into the filtrate can be effectively inhibited.

The filter medium may be a leaf filter including a wire mesh, a filter made of cloth (filter cloth), a filter made of synthetic resin, a filter made of paper, or the like.

Although filtering of the polymer solution may be performed by pressurized filtering or may be performed by vacuum filtering, for example, it is preferable that the filtering is performed by pressurized filtering from a viewpoint of easily adjusting differential pressure of an inlet and an outlet of a filtration device and improving the filtration rate of the polymer solution.

The differential pressure of an inlet and an outlet of a filtration device in the pressurized filtering is normally 0.1 MPa or more, and preferably 0.15 MPa or more, and is normally 1.0 MPa or less, and preferably 0.5 MPa or less.

When the differential pressure of solution filtration is not less than any of the lower limits set forth above, the filtration rate of the polymer solution can be effectively improved.

On the other hand, when the differential pressure of solution filtration is not more than any of the upper limits set forth above, the load on equipment can be reduced, and lifetime of the equipment can be improved.

### <Drying step>

In the drying step that can optionally be performed, the polymer solution after the removal step is dried. In other words, in the drying step, the solvent is removed from the polymer solution to obtain a dried recycled alicyclic structure-containing polymer.

Drying of the solvent may be performed by thermal drying or may be performed by vacuum drying. Moreover, the drying may be performed by thermal vacuum drying that is a combination of thermal drying and vacuum drying. From a viewpoint of removal rate of the solvent from the polymer solution, drying of the solvent is preferably performed by thermal vacuum drying.

Although no specific limitations are placed on the temperature at which thermal drying or thermal vacuum drying is performed so long as the solvent can be removed, the temperature is normally 150°C or higher, and preferably 180°C or higher, and is normally 300°C or lower, and preferably 250°C or lower.

The pressure at which vacuum drying or thermal vacuum drying is performed, in terms of gauge pressure, is normally -0.01 MPa or lower, preferably -0.05 MPa or lower, and more preferably -0.1 MPa or lower.

### <Recycled alicyclic structure-containing polymer>

The recycled alicyclic structure-containing polymer that is obtained by the presently disclosed production method can suitably be used as a raw material of a recycled shaped product because the crystalline polymer has been removed therefrom (i.e., the recycled alicyclic structure-containing polymer has high purity). Note that the recycled alicyclic structure-containing polymer obtained by the presently disclosed production method is normally amorphous.

The recycled alicyclic structure-containing polymer can optionally be kneaded with another polymer such as a crystalline polymer and then be used as a raw material of a recycled shaped product.

Specific examples of the shaped product include shaped products for optical applications such as lenses, prisms, optical films, optical sheets, optical disc substrates, light-guiding plates, light guides, optical fibers, and mirrors; shaped products for medical applications such as disposable syringes, pharmaceutical solution vials, films for pharmaceutical packaging, storage containers for medical devices, test cells, test containers, infusion bags, and syringe rods; shaped products for electrical and electronic applications such as sheets, films, plate materials, containers, and electrically insulating materials for electrical wire coatings, wafer shippers, capacitor films, circuit boards, connectors, and so forth; and also pipes, round bars, bottles, building materials, stationery, and so forth.

Repeating units (monomer units) forming the recycled alicyclic structure-containing polymer and proportions thereof can normally be the same as repeating units (monomer units) and proportions thereof that were previously described in the "Amorphous alicyclic structure-containing polymer" section.

The change from the weight-average molecular weight (Mw₁) of the amorphous alicyclic structure-containing polymer to the weight-average molecular weight (Mw₂) of the recycled alicyclic structure-containing polymer (= |Mw₁ - Mw₂|) is preferably less than 2,000, and more preferably less than 1,000.

When the change of weight-average molecular weight described above is less than any of the upper limits set forth above, physical properties of the amorphous alicyclic structure-containing polymer (pre-recycling) in the shaped product can be considered to be preserved well in the recycled alicyclic structure-containing polymer.

Moreover, the change from the glass-transition temperature (Tg₁) of the amorphous alicyclic structure-containing polymer to the glass-transition temperature (Tg₂) of the recycled alicyclic structure-containing polymer (= |Tg₁ - Tg₂|) is preferably less than 3°C, and more preferably less than 2°C.

When the change of glass-transition temperature described above is less than any of the upper limits set forth above, physical properties of the amorphous alicyclic structure-containing polymer (pre-recycling) in the shaped product can be considered to be preserved well in the recycled alicyclic structure-containing polymer.

### EXAMPLES

The following provides a more specific description of the present disclosure through examples and comparative examples. However, the present disclosure is not limited to just these examples. In the following examples and comparative examples, "parts" and "%" refer to amounts by mass unless otherwise specified.

Moreover, measurements and evaluations in the examples and comparative examples were performed by the following methods.

### <Weight-average molecular weight of amorphous alicyclic structure-containing polymer>

The weight-average molecular weight (Mw₁) of an amorphous alicyclic structure-containing polymer (pre-recycling) was measured at 40°C as a standard polyisoprene-equivalent value according to gel permeation chromatography (GPC) with cyclohexane as an eluent. An HLC8120GPC produced by Tosoh Corporation was used as a measurement apparatus.

Standard polyisoprene produced by Tosoh Corporation for a total of 10 points of Mw = 602, 1,390, 3,920, 8,050, 13,800, 22,700, 58,800, 71,300, 109,000, and 280,000 was used as standard polyisoprene.

Moreover, a sample was prepared by heating and dissolving a measurement sample (amorphous alicyclic structure-containing polymer) in cyclohexane at 40°C such as to give a sample concentration of 4 mg/mL.

The measurement was performed with three columns (TSKgelG5000HXL, TSKgelG4000HXL, and TSKgelG2000HXL produced by Tosoh Corporation) connected in series as a column and under conditions of a flow rate of 1.0 mL/min, a sample injection volume of 100 µmL, and a column temperature of 40°C.

### <Glass-transition temperature of amorphous alicyclic structure-containing polymer>

The glass-transition temperature (Tg₁) of an amorphous alicyclic structure-containing polymer (pre-recycling) was measured in accordance with JIS K7121 using a differential scanning calorimeter.

### <Filtration rate>

First, a 1.2 kg/m² filter bed formed of a filter aid (Radiolite^{®} #1500 (Radiolite is a registered trademark in Japan, other countries, or both) produced by Showa Chemical Industry Co., Ltd.) was formed (precoated) on a filter of a filtration device (produced by SARTORIUS). Next, 3 parts of a filter aid (Radiolite^{®} #1500 produced by Showa Chemical Industry Co., Ltd.) relative to 100 parts, in total, of a crystalline polymer and an amorphous alicyclic structure-containing polymer was added (body fed) to a polymer solution after a cooling step that was obtained in each example or comparative example. The filtration device was used to perform pressurized filtering of the polymer solution containing the filter aid with a filtration area of 12.56 cm² and a pressure of 0.2 MPa. The amount of filtrate obtained over 10 minutes was measured and was evaluated by the following standard. When a larger amount of filtrate is obtained, this indicates more efficient removal of a crystalline polymer from a shaped product.
A: 80 g or more
B: Not less than 40 g and less than 80 g
C: Less than 40 g

### <Total luminous transmittance>

A recycled alicyclic structure-containing polymer obtained in each example or comparative example was shaped to obtain a test specimen of 1 mm in thickness using a mold of 1 mm (thickness) × 3 cm (length) × 3 cm (width) and a pressing machine produced by Imoto Machinery Co., Ltd. Note that the pressing temperature was set as "Tg₁ + 60°C" and the pressing pressure was set as 20 MPa.

The total luminous transmittance of the test specimen was measured in accordance with a method in JIS K7105 using a turbidity meter (NDH 300A produced by Nippon Denshoku Industries Co., Ltd.) and was evaluated by the following standard. A higher total luminous transmittance indicates that a crystalline polymer is more effectively removed from a shaped product.
A: 70% or more
B: Not less than 60% and less than 70%
C: Less than 60%

### <Change of glass-transition temperature>

The glass-transition temperature (Tg₂) of a recycled alicyclic structure-containing polymer obtained in each example or comparative example was measured in the same manner as in measurement of the glass-transition temperature (Tg₁) of an amorphous alicyclic structure-containing polymer described above, and the change of glass-transition temperature (= | Tg₁ - Tg₂|) was evaluated by the following standard.
A: Value of |Tg₁ - Tg₂| is less than 2°C
B: Value of |Tg₁ - Tg₂| is not less than 2°C and less than 3°C
C: Value of |Tg₁ - Tg₂| is 3°C or more

### <Change of weight-average molecular weight>

The weight-average molecular weight (Mw₂) of a recycled alicyclic structure-containing polymer obtained in each example or comparative example was measured in the same manner as in measurement of the weight-average molecular weight (Mw₁) of an amorphous alicyclic structure-containing polymer described above, and the change of weight-average molecular weight (= |Mw₁ - Mw₂|) was evaluated by the following standard.
A: |Mw₁ - Mw₂| is less than 1,000
B: |Mw₁ - Mw₂| is not less than 1,000 and less than 2,000
C: |Mw₁ - Mw₂| is 2,000 or more

### (Example 1)

### <Production of shaped product>

A shaped product was produced using a mixture obtained through kneading of a copolymer (Mw₁ = 29,000; Tg₁ = 98°C) obtained from 85 parts of tricyclo[4.3.0.1^{2,5}]deca-3,7-diene (commonly referred to as dicyclopentadiene) and 15 parts of 8-ethyltetracyclo[4.4.0.1^{2,5}1^{7,10}]dodec-3-ene (commonly referred to as ethyltetracyclododecene (ETD)) as an amorphous alicyclic structure-containing polymer and polypropylene (produced by Japan Polypropylene Corporation; product name: NOVATEC PP; crystallization temperature (Tc₁) = 130°C) as a crystalline polymer.

### <Dissolution step>

A polymer solution was obtained by adding 11.1 parts of the shaped product obtained as described above (concentration: 10%) to 100 parts of cyclohexane (SP value = 8.2 (cal/cm³)^{1/2}; freezing point: 6.5 °C; boiling point: 81.4°C) as a solvent and dissolving the amorphous alicyclic structure-containing polymer through 6 hours of stirring at 25°C.

### <Heating step>

The obtained polymer solution was heated to 85°C and was stirred at this heating temperature for 1 hour.

### <Cooling step>

The polymer solution after the heating step was cooled to 25°C. The resultant polymer solution after the cooling step was used to evaluate the filtration rate. The result is shown in Table 1.

### <Removal step>

A filter bed formed of a filter aid (Radiolite^{®} #1500 produced by Showa Chemical Industry Co., Ltd.) was formed (precoated) on a filter of a filtration device (produced by SARTORIUS). Next, 3 parts of a filter aid (Radiolite^{®} #1500 produced by Showa Chemical Industry Co., Ltd.) relative to 100 parts, in total, of the crystalline polymer and the amorphous alicyclic structure-containing polymer was added to the polymer solution after the cooling step. The filtration device was used to perform pressurized filtering of the polymer solution containing the filter aid at a pressure of 0.2 MPa so as to remove the crystalline polymer and obtain a colorless and transparent solution (filtrate).

### <Drying step>

Cyclohexane serving as a solvent and other volatile components were removed from the solution obtained after the removal step at a temperature of 200°C and a pressure of -0.1 MPa (gauge pressure) using a high-temperature vacuum dryer (produced by Yamato Scientific Co., Ltd.) to obtain a recycled alicyclic structure-containing polymer.

The obtained recycled alicyclic structure-containing polymer was used to evaluate the total luminous transmittance, the change of glass-transition temperature, and the change of weight-average molecular weight. The results are shown in Table 1.

### (Example 2)

Various operations, measurements, and evaluations were performed in the same way as in Example 1 with the exception that the heating temperature was changed from 85°C to 100°C in the heating step. The results are shown in Table 1.

### (Example 3)

Various operations, measurements, and evaluations were performed in the same way as in Example 1 with the exception that the cooling temperature was changed from 25°C to 40°C in the cooling step. The results are shown in Table 1.

### (Example 4)

Various operations, measurements, and evaluations were performed in the same way as in Example 1 with the exception that the crystalline polymer was changed from polypropylene to polyethylene (produced by Japan Polyethylene Corporation; product name: NOVATEC HD; crystallization temperature (Tc₁): 130°C) in production of the shaped product, and the heating temperature was changed from 85°C to 60°C in the heating step. The results are shown in Table 1.

### (Example 5)

Various operations, measurements, and evaluations were performed in the same way as in Example 1 with the exception that the amorphous alicyclic structure-containing polymer was changed to a hydrogenated ring-opened polymer (Mw₁ = 49,000; Tg₁ = 140°C) of 8-ethyltetracyclo[4.4.0.1^{2,5}.1^{7,10}]dodec-3-ene (commonly referred to as ethyltetracyclododecene (ETD)) in production of the shaped product. The results are shown in Table 1.

### (Example 6)

Various operations, measurements, and evaluations were performed in the same way as in Example 1 with the exception that the solvent was changed from cyclohexane to xylene (SP value = 8.8 (cal/cm³)^{1/2}; freezing point: 13°C; boiling point: 138°C) in the dissolution step. The results are shown in Table 1.

### (Comparative Example 1)

Various operations, measurements, and evaluations were performed in the same way as in Example 1 with the exception that the heating temperature was changed from 85°C to 50°C in the heating step. The results are shown in Table 1.

### (Comparative Example 2)

Various operations, measurements, and evaluations were performed in the same way as in Example 1 with the exception that the cooling temperature was changed from 25°C to 50°C in the cooling step. The results are shown in Table 1.

### (Comparative Example 3)

Various operations, measurements, and evaluations were performed in the same way as in Example 1 with the exception that the solvent was changed from cyclohexane to xylene in the dissolution step, and the heating temperature was changed from 85°C to 160°C in the heating step. The results are shown in Table 1.

### (Comparative Example 4)

Various operations, measurements, and evaluations were performed in the same way as in Example 1 with the exception that the solvent was changed from cyclohexane to tetrahydrofuran (SP value = 9.1; freezing point: -108.4°C; boiling point: 66°C) in the dissolution step.

In Table 1, shown below:
"Polymer A" indicates copolymer obtained from dicyclopentadiene and ethyltetracyclododecene;
"Polymer B" indicates hydrogenated ring-opened polymer of ethyltetracyclododecene;
"PP" indicates polypropylene;
"PE" indicates polyethylene;
"CHA" indicates cyclohexane;
"XY" indicates xylene;
"THF" indicates tetrahydrofuran;
"Mw₁" indicates weight-average molecular weight of amorphous alicyclic structure-containing polymer (pre-recycling);
"Tg₁" indicates glass-transition temperature of amorphous alicyclic structure-containing polymer (pre-recycling);
"Tc₁" indicates crystallization temperature of crystalline polymer; and
"SP value" indicates solubility parameter value.

**[Table 1]**

| | | | Examples | | | | | | Comparative examples | | | |
|---|---|---|---|---|---|---|---|---|---|---|---|---|
| | | | 1 | 2 | 3 | 4 | 5 | 6 | 1 | 2 | 3 | 4 |
| Shaped product | Amorphous alicyclic structure-containing polymer | Type | Polymer A | Polymer A | Polymer A | Polymer A | Polymer B | Polymer A | Polymer A | Polymer A | Polymer A | Polymer A |
| | | Mw₁ | 29000 | 29000 | 29000 | 29000 | 49000 | 29000 | 29000 | 29000 | 29000 | 29000 |
| | | Tg₁ [°C] | 98 | 98 | 98 | 98 | 140 | 98 | 98 | 98 | 98 | 98 |
| | Crystalline polymer | Type | PP | PP | PP | PE | PP | PP | PP | PP | PP | PP |
| | | Crystallization temperature Tc₁ [°C] | 130 | 130 | 130 | 130 | 130 | 130 | 130 | 130 | 130 | 130 |
| Dissolution step | Solvent | Type | CHA | CHA | CHA | CHA | CHA | XY | CHA | CHA | XY | THF |
| | | SP value | 8.2 | 8.2 | 8.2 | 8.2 | 8.2 | 8.8 | 8.2 | 8.2 | 8.8 | 9.1 |
| | Solubility of amorphous alicyclic structure-containing polymer | | Soluble | Soluble | Soluble | Soluble | Soluble | Soluble | Soluble | Soluble | Soluble | Insoluble |
| | Solubility of crystalline polymer | | Insoluble | Insoluble | Insoluble | Insoluble | Insoluble | Insoluble | Insoluble | Insoluble | Insoluble | Insoluble |
| Heating step | Heating temperature [°C] | | 85 | 100 | 85 | 60 | 85 | 85 | 50 | 85 | 160 | 85 |
| | Difference between Tc₁ and heating temperature [°C] (Tc₁ - Heating temperature) | | 45 | 30 | 45 | 70 | 45 | 45 | 80 | 45 | -30 | 45 |
| Cooling step | Cooling temperature [°C] | | 25 | 25 | 40 | 25 | 25 | 25 | 25 | 50 | 25 | 25 |
| | Difference between heating temperature and cooling temperature [°C] (Heating temperature - Cooling temperature) | | 60 | 75 | 45 | 35 | 60 | 60 | 25 | 35 | 135 | 60 |
| | | | | | | | | | | | | |
| Evaluation | Filtration rate | | A | A | A | B | B | A | C | A | C | B |
| | Total luminous transmittance | | A | B | B | B | A | A | B | C | A | C |
| | Change of glass- transition temperature | | A | A | A | A | A | A | A | A | A | A |
| | Change of weight-average molecular weight | | A | A | A | A | A | A | A | A | A | A |

As can clearly be seen from Table 1, a crystalline polymer could be efficiently and effectively removed from a shaped product in Examples 1 to 6.

### INDUSTRIAL APPLICABILITY

According to the present disclosure, it is possible to provide a method of producing a recycled alicyclic structure-containing polymer in which a recycled alicyclic structure-containing polymer is obtained by efficiently and effectively removing a crystalline polymer from a shaped product containing the crystalline polymer and an alicyclic structure-containing polymer.

## Claims

1. A method of producing a recycled alicyclic structure-containing polymer from a shaped product containing a crystalline polymer and an alicyclic structure-containing polymer that is amorphous, comprising:
dissolving at least the alicyclic structure-containing polymer in a solvent through mixing of the shaped product with the solvent to obtain a polymer solution;
heating the polymer solution to a temperature of not lower than Tc₁ - 75°C and not higher than Tc₁°C, given that a crystallization temperature of the crystalline polymer is taken to be Tc₁°C;
cooling the polymer solution after the heating to a temperature that is lower than a heating temperature in the heating and that is not higher than 40°C; and
removing the crystalline polymer from the polymer solution after the cooling.

2. The method of producing a recycled alicyclic structure-containing polymer according to claim 1, wherein a cooling temperature in the cooling is 20°C or higher.

3. The method of producing a recycled alicyclic structure-containing polymer according to claim 1 or 2, wherein a cooling temperature in the cooling is 30°C or lower.

4. The method of producing a recycled alicyclic structure-containing polymer according to any one of claims 1 to 3, wherein the heating temperature in the heating is not lower than 60°C and not higher than 100°C.

5. The method of producing a recycled alicyclic structure-containing polymer according to any one of claims 1 to 4, wherein the heating temperature in the heating is Tc₁ - 20°C or lower.

6. The method of producing a recycled alicyclic structure-containing polymer according to any one of claims 1 to 5, wherein the solvent is a poor solvent for the crystalline polymer.

7. The method of producing a recycled alicyclic structure-containing polymer according to claim 6, wherein the poor solvent is cyclohexane.

8. The method of producing a recycled alicyclic structure-containing polymer according to any one of claims 1 to 7, wherein the crystalline polymer is polypropylene.
